Europäisches Patentamt

European Patent Office

Office européen des brevets

(11) Numéro de publication: **0 250 686**
**A1**

## (12) DEMANDE DE BREVET EUROPEEN

(21) Numéro de dépôt: 86401404.8

(22) Date de dépôt: 26.06.86

(51) Int. Cl.⁴: **G02B 15/22** , G02B 15/16 , G02B 7/105

(43) Date de publication de la demande:
07.01.88 Bulletin 88/01

(84) Etats contractants désignés:
**DE GB**

(71) Demandeur: **ETABLISSEMENTS PIERRE ANGENIEUX**
**Usine de Saint-Héand**
**F-42570 Saint-Héand(FR)**

(72) Inventeur: **Corbasson, Gérard**
**28, Avenue Louis Thiollier**
**F-42570 Saint-Heand(FR)**

(74) Mandataire: **Tony-Durand, Serge**
**Cabinet Tony-Durand 22, Boulevard Voltaire**
**F-75011 Paris(FR)**

(54) Dispositif d'objectif à focale variable.

(57) Objectif comprenant d'une part au moins deux groupes de lentilles mobiles (I, II, III, IV) suivant l'axe lors des variations de longueur focale commandées par l'opérateur, l'image finale restant fixe pendant ces variations pour un objet situé à une distance donnée de l'objectif, et d'autre part au moins deux autres groupes de lentilles (I, IV) participant, par leur déplacement suivant l'axe, aux variations de distance de mise-au-point commandées indépendamment par l'opérateur.

Dans cet objectif, l'un au moins de ces groupes de mise-au-point (I, IV) a sa position déterminée par une loi fonction de ces deux variables indépendantes que sont la longueur focale et la distance de mise-au-point commandées par l'opérateur. Les déplacements du groupe (I, IV) en cause par rapport à l'image finale, sont inférieurs en valeur absolue à 5 % de sa propre longueur focale lors des variations de distance de mise-au-point. Or ces déplacements ont pour effet de corriger certaines aberrations qui apparaîtraient s'il ne se déplaçait pas lors des variations de distance de mise-au-point.

Cet objectif est utilisable dans les appareils cinématographiques, photographiques et de télévision.

Fig.2

## "Dispositif d'objectif à focale variable"

La présente invention concerne les objectifs à longueur focale variable, comprenant plusieurs groupes de lentilles, dont les distances respectives peuvent varier, de telle sorte que le déplacement de certains de ces groupes mobiles permet d'obtenir, indépendamment et de façon continue, d'une part une variation de la longueur focale de l'objectif, l'image restant alors dans un plan fixe pour tout objet situé à une distance déterminée, et d'autre part une variation de la distance de mise-au-point, la longueur focale de l'objectif restant alors fixe.

Dans l'état actuel de la technique, ces deux missions indépendantes de variation de la longueur focale et de variation de la distance de mise-au-point sont assurées par des groupes de lentilles spécialisés, de telle sorte que certains groupes de lentilles seulement, qui constituent ce qu'on appelle le "variateur", se déplacent lors des variations de longueur focale, tandis qu'un autre groupe de lentilles ne se déplace que lors des variations de la distance de mise-au-point, et qu'on désignera ici sous le nom de "groupe-de-mise-au-point".

Or, plus la distance à l'objet est petite et plus ce groupe de mise-au-point doit se déplacer, et il en résulte une dégradation de la qualité de l'image finale qui devient très importante pour des domaines de distance de mise-au-point étendus.

La présente invention a pour but de remédier à cet inconvénient, en faisant participer au moins deux groupes de lentilles, par leur déplacement suivant l'axe, aux variations de distance de mise-au-point, de telle sorte que d'une part leurs déplacements sont moindres que si un seul groupe de lentilles mobile devait assurer à lui seul cette mission ; et d'autre part en assurant, par le positionnement judicieux d'au moins un groupe de mise-au-point, la correction des aberrations induites par la variation de distance de mise-au-point.

Pour mieux faire comprendre la portée de la présente invention, la description suivante concerne un objectif selon l'invention dont la composition structurelle est similaire à celle d'un des objectifs à longueur focale variable les plus répandus. Mais il doit être entendu que la présente invention n'est pas limitée à ce type particulier d'objectifs à longueur focale variable, et qu'elle est au contraire susceptible de nombreuses variantes.

La description suivante est donnée en référence au dessin annexé, sur lequel :

La figure 1 représente le schéma d'un objectif à longueur focale variable du type comportant quatre groupes de lentilles ;

La figure 2 est une vue en coupe longitudinale des lentilles d'un tel objectif ;

La figure 3 représente les courbes d'astigmatisme (tangentiel et sagittal) en fonction du champ image, pour différentes distances de mise au point de cet objectif ;

La figure 4 représente les courbes d'astigmatisme obtenues avec un objectif selon l'invention dont la composition structurelle est du même type que celle de l'objectif selon les figures 1 et 2.

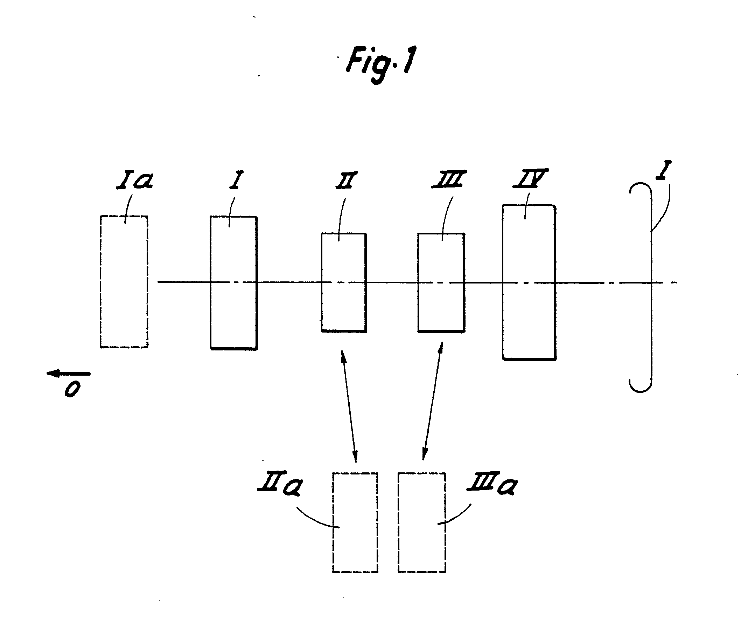

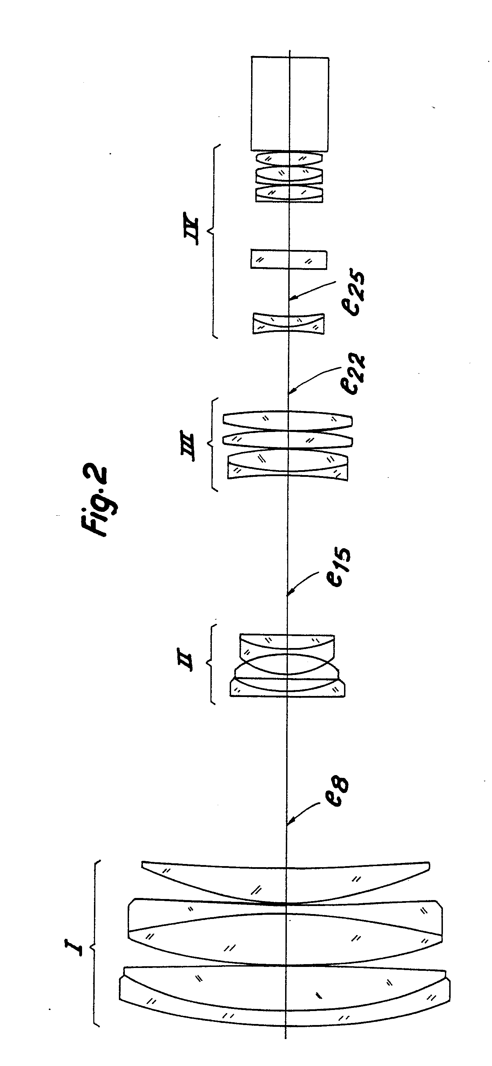

Comme déjà indiqué, les figures 1 et 2 représentent un objectif connu à longueur focale variable comportant quatre groupes de lentilles, dont les distances relatives peuvent varier, à savoir :

1° Un premier groupe I de mise-au-point, immobile par rapport à l'image finale lors des variations de la longueur focale, mais que l'on déplace suivant l'axe pour effectuer les variations de distance de mise-au-point et qui se trouve à la partie frontale de l'objectif, du côté de l'objet;

2° Un second groupe II et un troisième groupe III, tous deux mobiles suivant l'axe et dont le déplacement suivant une loi optique déterminée fait varier le grandissement donné par ces deux groupes, entraînant ainsi la variation de la longueur focale de l'ensemble, mais conçus pour travailler entre un objet et une image virtuels de positions fixes par rapport à l'image finale, de sorte que ces deux groupes, qui constituent le variateur, sont immobiles par rapport à l'image finale lors des variations de la distance de mise-au-point ;

3° Enfin un dernier groupe IV de lentilles, situé du côté de l'image finale et immobile par rapport à elle.

Sur la figure 1, la flèche 0 désigne la direction de l'objet et la référence i désigne l'image finale.

Dans l'état actuel de la technique, dans ce type d'objectif à longueur focale variable constitué de quatre groupes de lentilles, seul le groupe avant I permet d'effectuer, par son déplacement suivant l'axe, par exemple dans la position Ia, une variation de la distance entre l'objet et l'image finale. Ceci présente un certain nombre d'inconvénients.

Parmi ceux-ci, l'un des plus importants réside dans le fait qu'en raison de la course de déplacement à prévoir pour cet élément, les aberrations de l'image varient de façon importante selon la distance de mise-au-point.

En particulier, l'astigmatisme devient prohibitif pour des objets situés très loin ou très près de l'objectif, selon la distance pour laquelle on a choisi de corriger cette aberration au mieux. Il en résulte une dégradation importante de la fonction de transfert de modulation de l'objectif.

Le tableau I donne les caractéristiques d'un tel objectif à longueur focale variable, à savoir : les rayons de courbure en millimètres, le signe plus désignant des surfaces dont la concavité est tournée vers l'image, les épaisseurs des lentilles et entreverres en millimètres, les indices de réfraction et les nombres d'Abbe.

## TABLEAU I

| | | | |
|---|---|---|---|
| R1 = + 288.40 | e1 = 6.0 | nd1 = 1.785 | ν1 = 26.1 |
| R2 = + 184.06 | e2 = 25.5 | nd2 = 1.487 | ν2 = 70.4 |
| R3 = -1786.00 | e3 = 0.2 | nd3 = 1. | |
| R4 = + 266.24 | e4 = 27.0 | nd4 = 1.487 | ν4 = 70.4 |
| R5 = - 319.40 | e5 = 5.0 | nd5 = 1.613 | ν5 = 44.3 |
| R6 = +2004.00 | e6 = 0.2 | nd6 = 1. | |
| R7 = + 163.37 | e7 = 18.5 | nd7 = 1.486 | ν7 = 81.8 |
| R8 = +1255.00 | | nd8 = 1. | |
| | | | |
| R9 = +5200.00 | e9 = 2.4 | nd9 = 1.487 | ν9 = 70.2 |
| R10= + 52.98 | e10= 6.9 | nd10= 1. | |
| R11= +8198.00 | e11= 2.4 | nd11= 1.487 | ν11= 70.2 |
| R12= + 43.51 | e12= 11.0 | nd12= 1. | |
| R13= - 56.50 | e13= 1.8 | nd13= 1.609 | ν13= 59.0 |
| R14= + 57.53 | e14= 6.5 | nd14= 1.847 | ν14= 23.9 |
| R15= + 456.50 | | nd15= 1. | |
| | | | |
| R16= - 215.25 | e16= 2.5 | nd16= 1.785 | ν16= 26.2 |
| R17= + 112.10 | e17= 12.0 | nd17= 1.603 | ν17= 65.5 |
| R18= - 112.52 | e18= 0.2 | nd18= 1. | |
| R19= + 299.00 | e19= 8.0 | nd19= 1.603 | ν19= 65.5 |
| R20= - 162.55 | e20= 0.2 | nd20= 1. | |
| R21= + 132.20 | e21= 9.5 | nd21= 1.603 | ν21= 65.5 |
| R22= - 254.70 | | nd22= 1. | |
| | | | |
| R23= - 81.82 | e23= 1.8 | nd23= 1.697 | ν23= 55.5 |
| R24= + 43.04 | e24= 6.0 | nd24= 1.847 | ν24= 23.9 |
| R25= + 166.79 | e25= 24.0 | nd25= 1. | |
| R26= ∞ | e26= 9.0 | nd26= 1.516 | ν26= 64.2 |
| R27= ∞ | e27= 25.0 | nd27= 1. | |
| R28= + 488.50 | e28= 1.8 | nd28= 1.806 | ν28= 40.9 |
| R29= + 80.41 | e29= 7.0 | nd29= 1.487 | ν29= 70.2 |
| R30= - 77.20 | e30= 0.2 | nd30= 1. | |
| R31= + 178.34 | e31= 1.8 | nd31= 1.785 | ν31= 26.2 |
| R32= + 49.55 | e32= 7.0 | nd32= 1.487 | ν32= 70.2 |
| R33= - 136.30 | e33= 0.2 | nd33= 1. | |
| R34= + 50.18 | e34= 7.0 | nd34= 1.516 | ν34= 64.1 |
| R35= - 477.40 | e35= 1.0 | nd35= 1. | |
| | | | |
| R36= ∞ | e36= 47.9 | nd36= 1.517 | ν36= 64.2 |
| R37= ∞ | | nd37= 1. | |

Le tableau II donne les valeurs des trois entreverres variables, pour différentes longueurs focales de l'objectif.

TABLEAU II

| longueur focale | distances entre groupes mobiles | | |
|---|---|---|---|
| | e8 | e15 | e22 |
| F = 12.3 | 1.96 | 202.32 | 10.00 |
| F = 31.8 | 56.97 | 133.47 | 23.84 |
| F = 62.1 | 81.41 | 95.92 | 36.95 |
| F = 114.6 | 96.69 | 65.46 | 52.13 |
| F = 195.2 | 106.07 | 39.62 | 68.59 |
| F = 375 | 114.07 | 5.95 | 94.26 |

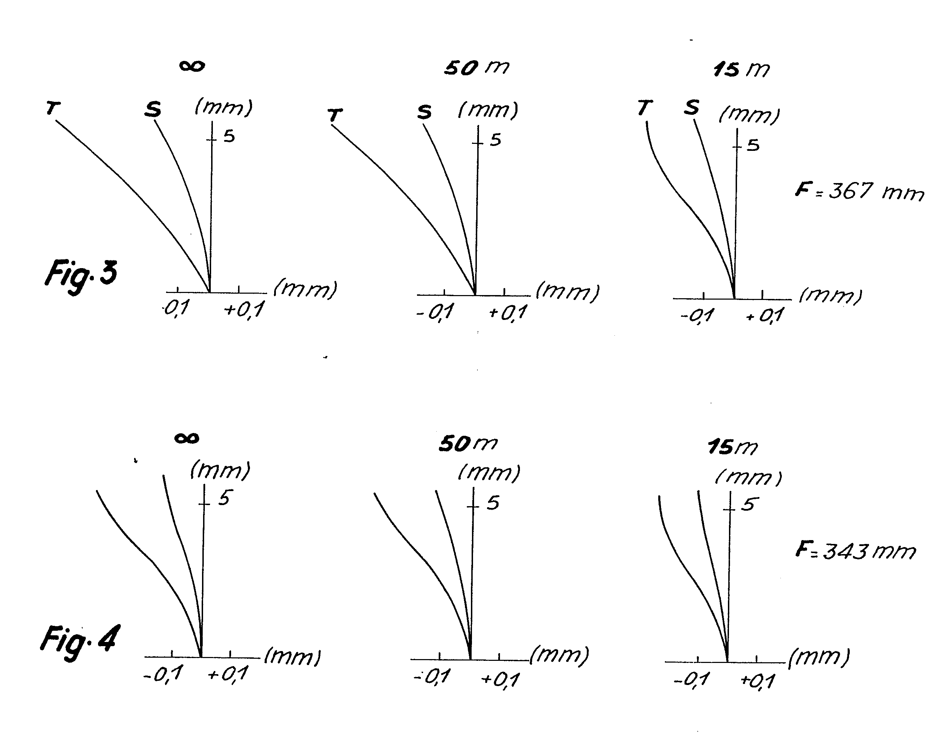

Ainsi qu'il a déjà été indiqué, la figure 3 représente les courbes d'astigmatisme (tangentiel et sagittal) en fonction du champ image, pour différentes distances de mise-au-point. Comme on peut le constater, ces courbes démontrent une dégradation importante de la qualité de l'image finale pour des domaines étendus de mise-au-point.

La présente invention a pour but de corriger l'aberration induite par les variations de la distance de mise-au-point, en déplaçant, dans le cas particulier de l'exemple proposé, une partie du quatrième groupe de lentilles.

Le déplacement d'une partie de ce groupe de lentilles pour participer à la variation de la distance de mise-au-point, en combinaison avec le premier groupe de lentilles, a pour effet que ce premier groupe se déplace moins que s'il devait assurer seul cette mission, réduisant par là les aberrations induites par l'amplitude de son déplacement. D'autre part son positionnement judicieux permet de corriger l'astigmatisme créé par toute la partie antérieure de l'objectif.

Comme l'astigmatisme dépend à la fois de la longueur focale et de la distance de mise-au-point, le déplacement d'une partie du quatrième groupe de lentilles, permettant de corriger au mieux cette aberration, doit s'opérer selon une loi fonction de deux variables indépendantes.

En effet, dans les objectifs à longueur focale variable du type traditionnel comme celui cité en exemple, où la mise-au-point s'effectue par le seul déplacement du premier groupe de lentilles, l'image de l'objet à travers ce premier groupe est dans une position fixe par rapport à l'image finale, quelle que soit la distance de l'objet, et cette position est celle pour laquelle le variateur, constitué du deuxième et du troisième groupes de lentilles, est conçu. Le variateur en donne à son tour une image dont la position est fixe par rapport à l'image finale, quelle que soit la longueur focale de l'objectif et la distance de mise-au-point.

Dans l'état actuel de la technique, dans ce type d'objectif à longueur focale variable, la mission du premier groupe de lentilles, lorsque l'objet est à une distance finie, est de ramener la position de l'image de l'objet à travers ce premier groupe à cette même position, fixe par rapport à l'image finale, pour laquelle le variateur a été conçu.

Mais si le déplacement du premier groupe de lentilles est limité en amplitude, pour éviter l'inconvénient exposé ci-dessus, l'image d'un objet à distance finie à travers ce premier groupe de lentilles n'est plus à cette même position, et le variateur en donne une image dont la position par rapport à l'image finale varie lorsque la longueur focale de l'ensemble varie. Il faut alors, pour obtenir une image finale fixe, faire varier la position d'au moins un élément du groupe arrière de lentilles lorsque la longueur focale varie.

4

Quel que soit le type d'objectif à longueur focale variable auquel s'applique la présente invention, la position d'au moins un des groupes de mise-au-point ne peut donc être déterminée que par la combinaison de deux signaux indépendants, donnant des informations sur la distance de mise-au-point d'une part, et sur la longueur focale d'autre part, telles qu'elles sont demandées par l'opérateur de l'objectif. Les déplacements de ce groupe de mise au point, par rapport à l'image finale sont inférieurs en valeur absolue à 5% de sa propre longueur focale lors des variations de distance de mise-au-point, et ses déplacements ont pour effet de corriger certaines aberrations qui apparaîtraient s'il ne se déplaçait pas lors des variations de distance de mise-au-point.

Dans une forme de réalisation avantageuse de la présente invention, appliquée à l'exemple du tableau I, l'invention a pour objet un objectif à longueur focale variable, constitué en cinq groupes de lentilles dont les distances respectives peuvent varier, et dans lequel :

1° Le groupe de lentilles le plus proche de l'objet se déplace à la fois lors des variations de distance de mise-au-point et des variations de longueur focale ;

2° Le deuxième et le troisième groupes de lentilles se déplacent lors des variations de la longueur focale uniquement ;

3° Le quatrième groupe de lentilles est immobile par rapport à l'image finale ;

4° Le cinquième groupe de lentilles se déplace à la fois lors des variations de la distance de mise-au-point et des variations de la longueur focale.

Le tableau III indique les corrections à apporter aux tableaux I et II dans cette forme de réalisation avantageuse.

TABLEAU III

CORRECTION SUR L'ENTREVERRE e8

| longueur focale | distance de mise-au-point | | | | |
|---|---|---|---|---|---|
| | ∞ | 100 m | 50 m | 30 m | 15 m |
| F= 12.3 | -0.00 | -0.00 | -0.00 | -0.00 | -0.00 |
| F= 31.7 | -0.13 | -0.12 | -0.11 | -0.09 | -0.06 |
| F= 60.8 | -1.16 | -1.09 | -1.03 | -0.85 | -0.50 |
| F= 109.0 | -1.81 | -1.69 | -1.49 | -1.22 | -0.73 |
| F= 179.6 | -2.00 | -1.86 | -1.77 | -1.46 | -0.89 |
| F= 350.0 | -0.80 | -0.75 | -0.70 | -0.60 | -0.50 |

CORRECTION SUR L'ENTREVERRE e27

| longueur focale | distance de mise-au-point | | | | |
|---|---|---|---|---|---|
| | ∞ | 100 m | 50 m | 30 m | 15 m |
| F= 12.3 | -0.00 | -0.00 | -0.00 | -0.00 | -0.00 |
| F= 31.7 | -0.00 | -0.00 | -0.00 | -0.00 | -0.00 |
| F= 60.8 | -0.11 | -0.10 | -0.09 | -0.08 | -0.05 |
| F= 109.0 | -0.54 | -0.51 | -0.34 | -0.28 | -0.17 |
| F= 179.6 | -1.69 | -1.58 | -1.51 | -1.26 | -0.78 |
| F= 350.0 | -2.42 | -2.28 | -2.14 | -1.85 | -1.55 |

Comme déjà indiqué, la figure 4 représente les courbes d'astigmatisme ainsi obtenues. Ces courbes doivent évidemment être comparées à celles de la Figure 3. Ceci permet de se rendre compte des résultats avantageux obtenus avec le présent objectif.

**Revendications**

1. Dispositif d'objectif à longueur focale variable, utilisable dans les appareils cinématographiques, photographiques et de télévision, comprenant d'une part au moins deux groupes de lentilles mobiles suivant l'axe lors des variations de longueur focale commandées par l'opérateur, l'image finale restant fixe pendant ces variations pour un objet situé à une distance donnée de l'objectif, et d'autre part au moins deux autres groupes de lentilles participant, par leur déplacement suivant l'axe, aux variations de distance de mise-au-point commandées indépendamment par l'opérateur, caractérisé en ce que l'un au moins de ces groupes de mise-au-point a sa position déterminée par une loi fonction de ces deux variables indépendantes que sont la longueur focale et la distance de mise-au-point commandées par l'opérateur, ses déplacements par rapport à l'image finale étant inférieurs en valeur absolue à 5% de sa propre longueur focale lors des variations de distance de mise-au-point, et ses déplacements ayant pour effet de corriger certaines aberrations qui apparaîtraient s'il ne se déplaçait pas lors des variations de distance de mise-au-point.

2. Dispositif d'objectif à longueur focale variable selon la revendication 1, caractérisé en ce que l'un des groupes mobiles de lentilles de mise-au-point, dont la position est déterminée par une loi fonction de ces deux variables indépendantes que sont la longueur focale et la distance de mise-au-point, est le groupe arrière situé du côté de l'image finale.

3. Dispositif d'objectif à longueur focale variable selon la revendication 2, caractérisé en ce que le groupe avant de lentilles, situé du côté de l'objet, participe par son déplacement aux variations de distance de mise-au-point.

4. Dispositif d'objectif à focale variable selon la revendication 1, caractérisé en ce que l'un des groupes de lentilles mobiles de mise-au-point, dont la position est déterminée par une loi fonction de la longueur focale et de la distance de mise-au-point, est le groupe avant situé du côté de l'objet.

5. Dispositif d'objectif à focale variable selon la revendication 4, caractérisé en ce que le groupe de lentilles, situé du côté de l'image finale, participe par son déplacement aux variations de distance de mise-au-point.

Fig. 2

0 250 686

∞　　　　　50 m　　　　　15 m

T　S　(mm)　　　T　S　(mm)　　　T　S　(mm)

5　　　　　　　5　　　　　　　5

F = 367 mm

Fig. 3

-0,1　+0,1　(mm)　　　-0,1　+0,1　(mm)　　　-0,1　+0,1　(mm)

∞　　　　　50 m　　　　　15 m

(mm)　　　　　(mm)　　　　　(mm)

5　　　　　　　5　　　　　　　5

F = 343 mm

Fig. 4

-0,1　+0,1　(mm)　　　-0,1　+0,1　(mm)　　　-0,1　+0,1　(mm)

0 250 686

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl 4) |
|---|---|---|---|
| X | PATENTS ABSTRACTS OF JAPAN, vol. 7, no. 262 (P-238)[1407], 22 novembre 1983; & JP-A-58 144 808 (KONISHIROKU SHASHIN KOGYO K.K.) 29-08-1983 * Résumé * | 1,4 | G 02 B  15/22<br>G 02 B  15/16<br>G 02 B   7/105 |
| Y | US-A-3 930 720  (K. UESUGI) * Colonne 1, lignes 42-61; colonne 8, ligne 25 - colonne 9, ligne 12; figures 4A-4D * | 1-5 | |
| Y | US-A-3 850 507  (K. UESUGI) * Colonne 1, lignes 50-64 * | 1-5 | |
| Y | PATENTS ABSTRACTS OF JAPAN, vol. 8, no. 141 (P-283)[1578], 30 juin 1984; & JP-A-59 40 616 (CANON K.K.) 06-03-1984 * Résumé * | 1-5 | DOMAINES TECHNIQUES RECHERCHES (Int. Cl.4)<br><br>G 02 B   7/00<br>G 02 B  15/00 |
| A | FR-A-2 220 800  (CANON K.K.) * Page 4, ligne 9 - page 5, ligne 7; figures 2A-2C * | 1 | |
| A | US-A-4 198 126  (H. ABE et al.) * Abrégé * | 2,3 | |
| A | US-A-3 975 089  (E. BETENSKY) * Abrégé * | 4,5 | |
|  | ---          -/- | | |

Le présent rapport de recherche a été établi pour toutes les revendications

| Lieu de la recherche | Date d'achèvement de la recherche | Examinateur |
|---|---|---|
| LA HAYE | 02-03-1987 | POPINEAU G.J.P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82

## DOCUMENTS CONSIDERES COMME PERTINENTS

Page 2

| Catégorie | Citation du document avec indication, en cas de besoin, des parties pertinentes | Revendication concernée | CLASSEMENT DE LA DEMANDE (Int Cl.4) |
|---|---|---|---|
| A | US-A-3 661 445 (A. SOMEYA) --- | | |
| A | GB-A- 836 877 (W. WATSON AND SONS LTD. et al.) --- | | |
| E | FR-A-2 580 412 (ETS PIERRE ANGENIEUX) * En entier * ----- | 1-5 | |
| | | | **DOMAINES TECHNIQUES RECHERCHES (Int. Cl.4)** |

Le présent rapport de recherche a été établi pour toutes les revendications

| Lieu de la recherche | Date d'achèvement de la recherche | Examinateur |
|---|---|---|
| LA HAYE | 02-03-1987 | POPINEAU G.J.P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

OEB Form 1503 03 82